# EUROPEAN PATENT APPLICATION

(11) **EP 4 579 499 A1**
(43) Date of publication of application: **02.07.2025**
(21) Application number: 24223274.2
(22) Date of filing: 25.12.2024
(51) Int. Cl.: G06F 21/44, H04L 9/40, G06F 21/85

(54) **CONTROL DEVICE, CONSUMABLES, HOST DEVICE, AND AUTHENTICATION METHOD**

(30) Priority: 29.12.2023 CN 202311870308
(71) Applicant: Zhuhai Pantum Electronics Co., Ltd., Zhuhai, Guangdong (CN)
(72) Inventor: ZHAO, xiaodong, Zhuhai, Guangdong, (CN); LI, haixiong, Zhuhai, Guangdong, (CN); TIAN, yi, Zhuhai, Guangdong, (CN); HUANG, xuqiu, Zhuhai, Guangdong, (CN)
(74) Representative: Sun, Yiming

(57) **Abstract**

The present disclosure provides a control device, consumables, a host device, and an authentication method, where the control device includes a first acquisition unit, where the first acquisition unit is configured to acquire first authentication data on a communication bus, and the communication bus is configured for communication linkage between the host device and at least two chips; an authentication unit, which obtains second authentication data based on the first authentication data, where the second authentication data is used to determine total authentication data, and the total authentication data is used to determine whether there is a chip, of the at least two chips, that does not meet expectations. In the embodiments of the present disclosure, in the process of authenticating multiple chips, the number of information interactions between the host device and the chips can be reduced, the load of the host device can be reduced, and the system performance overhead can be saved.

## Description

### FIELD OF THE DISCLOSURE

The present disclosure relates to the field of communication technology, and in particular to a control device, consumables, a host device, and an authentication method.

### BACKGROUND

In order to enrich the features of a host device, the host device is often used in combination with some peripheral accessories. To facilitate the management of accessories, each accessory usually includes a chip, and the chip of each accessory communicates with the host device through the same communication bus. In order to improve the security of the accessories, the host device needs to authenticate each chip before entering the operating state.

In the related art, when multiple chips are installed on a host device, the host device needs to authenticate each chip separately. Specifically, the host device needs to send authentication data to each chip separately, and then confirm whether each chip has passed the authentication based on the authentication result fed back by each chip. However, during the above authentication process, the host device needs to exchange information with each chip multiple times, resulting in a high load on the host device. As the number of chips increases, the load on the host device will become higher and higher.

It should be noted that the information disclosed in the background section of this disclosure is only intended to deepen the understanding of the general background technology of this disclosure, and should not be regarded as an admission or suggestion in any form that the information constitutes prior art already known to those skilled in the art.

### SUMMARY

The present disclosure provides a control device, consumables, a host device, and an authentication method to help solve the problems in the existing technologies that during the process of authenticating multiple chips, the host device needs to interact with each chip many times, resulting in a high load on the host device.

In a first aspect, an embodiment of the present disclosure provides an authentication method, and the method includes: acquiring first authentication data on a communication bus, where the communication bus is used for communication linkage between a host device and at least two chips; and obtaining second authentication data based on the first authentication data, and the second authentication data is used to determine total authentication data, and the total authentication data is used to determine whether there is a chip, of the at least two chips, that does not meet the expectations.

In a second aspect, an embodiment of the present disclosure provides a control device, and the control device includes: an acquisition unit, configured to acquire first authentication data on a communication bus, where the communication bus is configured for communication linkage between a host device and at least two chips; and an authentication unit, configured to obtain second authentication data based on the first authentication data, where the second authentication data is used to determine total authentication data, and the total authentication data is used to determine whether there is a chip, of the at least two chips, that does not meet the expectations.

In a third aspect, an embodiment of the present disclosure provides a consumable, and the consumable includes: a housing; a developer accommodating portion, located in the housing, for accommodating the developer; and the control device described in the second aspect.

In a fourth aspect, an embodiment of the present disclosure provides a consumable, and the consumable includes: a photosensitive drum; a charging roller, used for charging the photosensitive drum; and the control device described in the second aspect.

In a fifth aspect, an embodiment of the present disclosure provides an authentication method, and the authentication method is applied to a host device, where the host device is communicatively connected to at least two chips via a communication bus, and the authentication method includes: outputting initial authentication data on the communication bus, the initial authentication data being used for authentication processing of some or all of the at least two chips; and acquiring total authentication data on the communication bus; and according to the total authentication data, determining whether there is a chip, of the at least two chips, that does not meet the expectations.

In a sixth aspect, an embodiment of the present disclosure provides a host device, and the host device includes a host device control unit, where the host device is communicatively connected to at least two chips via a communication bus, and the host device control unit is configured to execute the method described in the fifth aspect.

In the embodiments of the present disclosure, during the process of authenticating multiple chips, the number of information interactions between the host device and the chips can be reduced, the load of the host device can be reduced, and the system performance overhead can be saved.

### BRIEF DESCRIPTION OF THE DRAWINGS

In order to more thoroughly illustrate the technical solutions of the embodiments of the present disclosure, the drawings essential for understanding the embodiments will be briefly introduced hereinafter. Apparently, the drawings described below are only some embodiments of the present disclosure. For a person skilled in the art, other drawings can be obtained based on these drawings without making creative efforts.
FIG. 1 is a structural block diagram of a communication system in accordance with an embodiment of the present disclosure;
FIG. 2 is a structural block diagram of another communication system in accordance with an embodiment of the present disclosure;
FIG. 3 is a structural block diagram of another communication system in accordance with an embodiment of the present disclosure;
FIG. 4 is a schematic diagram of an independent authentication scheme in the relevant art;
FIG. 5A is a schematic diagram of an authentication scheme in accordance with an embodiment of the present disclosure;
FIG. 5B is a schematic diagram of another authentication scheme in accordance with an embodiment of the present disclosure;
FIG. 5C is a schematic diagram of another authentication scheme in accordance with an embodiment of the present disclosure;
FIG. 6A is a schematic diagram of an application scenario in accordance with an embodiment of the present disclosure;
FIG. 6B is a schematic diagram of another application scenario in accordance with an embodiment of the present disclosure;
FIG. 6C is a schematic diagram of another application scenario in accordance with an embodiment of the present disclosure;
FIG. 7 is a structural block diagram of the first chip in accordance with an embodiment of the present disclosure;
FIG. 8 is a schematic diagram of another application scenario in accordance with an embodiment of the present disclosure;
FIG. 9 is a structural block diagram of a host device in accordance with an embodiment of the present disclosure;
FIG. 10 is a structural block diagram of a control device in accordance with an embodiment of the present disclosure;
FIG. 11 is a flow chart of an authentication method in accordance with an embodiment of the present disclosure;
FIG. 12 is a flow chart of another authentication method in accordance with an embodiment of the present disclosure;
FIG. 13 is a schematic structure diagram of a consumable in accordance with an embodiment of the present disclosure;
FIG. 14 is a schematic structure diagram of another consumable in accordance with an embodiment of the present disclosure;
FIG. 15 is a schematic structure diagram of another consumable in accordance with an embodiment of the present disclosure; and
FIG. 16 is a schematic structure diagram of another consumable in accordance with an embodiment of the present disclosure.

### DETAILED DESCRIPTION

In order to better understand the technical solution of the present disclosure, the embodiments of the present disclosure are described in detail hereinafter with reference to the accompanying drawings.

It should be noted that the described embodiments are only part of the embodiments of the present disclosure, rather than all the embodiments of the present disclosure. Based on the embodiments in the present disclosure, all other embodiments obtained by a person skilled in the art without making creative efforts are within the scope of protection of the present disclosure.

The terms used in the embodiments of the present disclosure are only for the purpose of describing specific embodiments, and are not intended to limit the present disclosure. The singular forms "a", "said" and "the" used in the embodiments of the present disclosure and the appended claims are also intended to include plural forms, unless the context clearly indicates other meanings.

It should be noted that the term "and/or" used in this article is only a description of the association relationship of associated objects, indicating that there can be three relationships. For example, A and/or B can represent: A exists alone, A and B exist at the same time, and B exists alone. In addition, the character "/" in this article generally indicates that the associated objects before and after are in an "or" relationship.

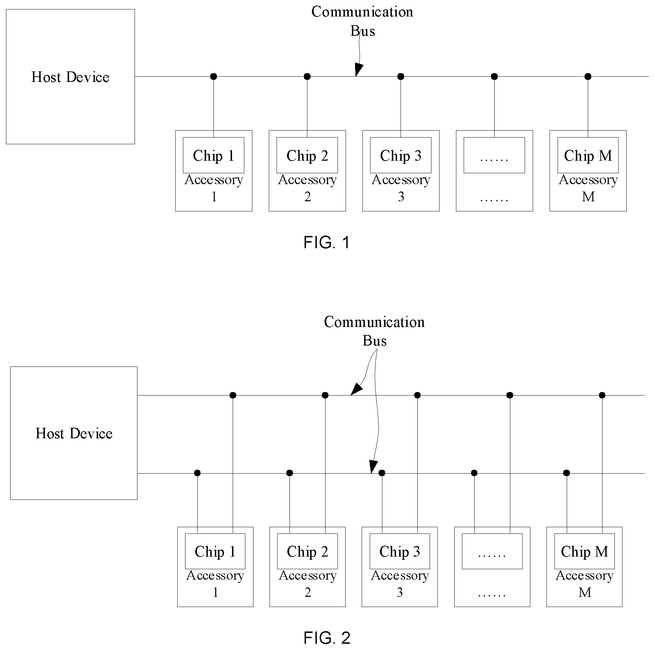

FIG. 1 illustrates a structural block diagram of a communication system in accordance with an embodiment of the present disclosure. As shown in FIG. 1, the communication system includes a host device and M accessories (accessory 1-accessory M), M≥2. Each accessory includes a chip, and the chip is communicatively connected to the host device through a communication bus, so as to realize data transmission between the host device and the chip. Specifically, the communication bus can be an electrical, optical, infrared or another appropriate information transmission path disposed between the host device and each chip. It should also be noted that there can be multiple chips arranged on a single accessory, and thus, the communication system can include only one accessory. The embodiments of the present disclosure do not limit the number of accessories, as long as the number of chips arranged corresponding to the accessories is at least 2.

In some embodiments, the communication bus is a single-wire communication bus, that is, the host device and the chips transmit data through a single wire. It should be noted that when the communication bus is a single-wire communication bus, the communication protocol between the host device and the chips should be a communication protocol that meets the single-wire requirements.

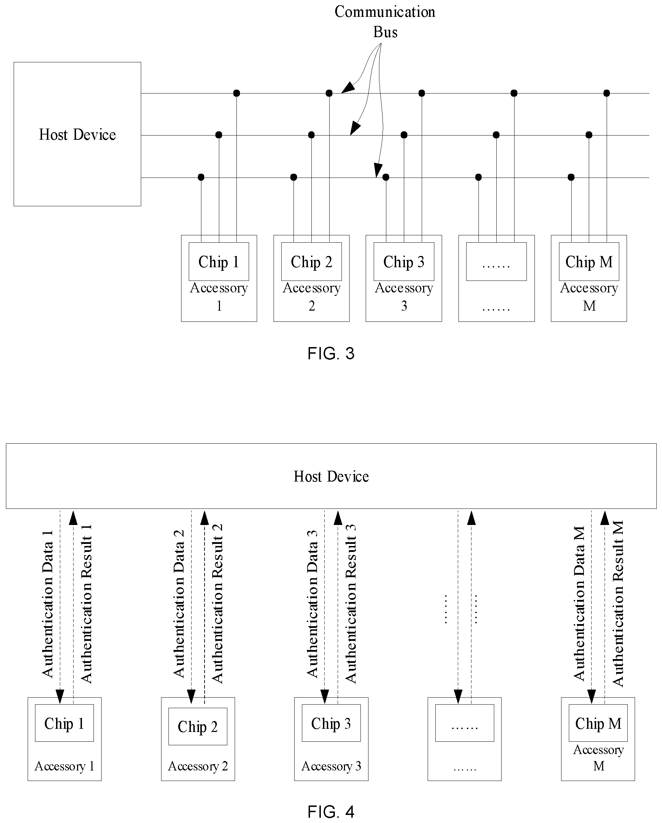

In some embodiments, the communication bus is a multi-wire communication bus, that is, the host device and the chips transmit data through multiple wires. It should be noted that when the communication bus is a multi-wire communication bus, the communication protocol between the host device and the chips should be a communication protocol that meets the multi-wire requirements. Exemplarily, in the communication system shown in FIG. 2, the communication bus is a 2-wire communication bus; in the communication system shown in FIG. 3, the communication bus is a 3-wire communication bus. Apparently, those skilled in the art can also design other wire communication buses according to actual needs, which is not limited in the present disclosure. It should also be noted that the number of communication buses specified in the above content only limits the number of communication buses for transmitting communication data such as data signals, clock signals, etc., between the host device and the chips. Those skilled in the art can set the way in which a chip obtains power signals and ground signals according to actual needs, which is not limited in the present disclosure.

In some embodiments, the host device is an image forming device, and the accessories are consumables. Exemplarily, the image forming device may be: an inkjet printer, a laser printer, a 3D printer, a label printer, a dot matrix printer, etc. Correspondingly, the consumables may be housings for accommodating recording materials, such as ink cartridges, toner cartridges, toner cartridges, toner cartridges, ribbon cartridges, etc.

When an accessory is a consumable, a chip is a consumable chip installed on the accessory. A consumable chip is an electronic device with a storage function. In the consumable chip, information about the consumable is stored, such as the manufacturer, type, color, capacity and usage of recording materials (toner, ink), etc. Therefore, when a user installs the consumable into the host device, the information stored in the consumable chip can be provided to the host device, so that the host device can know the basic information of the consumable. In addition, during the image forming process, the host device can also write the updated information of the consumable (e.g., the usage of the recording material) into the consumable chip. Here, the consumable chip includes a board and contact points interconnected with the board, where the contact points included on the chip are used to electrically connect to the host device. Furthermore, the consumable chip can also include a transfer plate connected to the board, and the contact points are at least partially disposed on the transfer plate.

In some embodiments, a consumable is of a split structure, including a drum box and a developer box that are detachable from each other, where the drum box includes a photosensitive drum and a charging roller, and the developer box includes a developer accommodating portion, a developer roller, and a developer conveying element. Apparently, a consumable may also be of an integrated structure, for example, a consumable includes a developer accommodating portion, a developer roller, a developer conveying element, a photosensitive drum, a charging roller, etc.

Furthermore, a consumable may also include only a housing and a developer accommodating portion. It should also be noted that a consumable may also be a developer box or drum box. The developer accommodating portion is used to accommodate a developer such as a toner, and the developer conveying element is a component such as a powder feeding roller, a powder feeding screw for stirring and/or conveying toner, etc. Apparently, a developer box may also include only a developer accommodating portion, which is not limited here. Alternatively, a developer box may also include only a developer accommodating portion and a developer conveying element, which is not limited here.

In some embodiments, a consumable may also include a powder cartridge and/or an imaging component, and the powder cartridge is used to deliver toner to the imaging component when the toner contained in the imaging component is insufficient so that the image forming device forms an image based on the toner delivered by the imaging component. When a consumable is a powder cartridge, the consumable may only include a housing and a developer accommodating portion, or may include a housing, a developer accommodating portion, and a developer conveying element, which is not limited in this disclosure. When a consumable is an imaging component, the consumable may include a housing, a developer accommodating portion, a developer conveying unit, a charging roller, a photosensitive drum, etc., which is not limited in the disclosure.

It should be noted that a consumable mentioned in the embodiments of the present disclosure may also be other components, parts, or units (such as paper boxes, etc.) in the image forming device that are easily damaged and need to be replaced, which also belong to the technical solution corresponding to the consumables protected by this disclosure.

In some embodiments, the host device may be a computer; accordingly, the accessory may be a peripheral device/apparatus of the computer. Alternatively, the host device may be a mobile terminal (such as a mobile phone, tablet computer, PDA, etc.); accordingly, the accessory may be an attachment or peripheral device or apparatus of the mobile terminal, such as a lithium battery chip, a wearable device chip, etc., which is not specifically limited in the embodiments of the present disclosure.

In some embodiments, the host device and the chips are electrically connected by contact pins, contact points or springs to establish the communication bus. In order to improve the safety of the accessories, the host device needs to authenticate chips before entering the operating state. In related technologies, when multiple chips are installed on the host device, the host device needs to authenticate each chip separately.

FIG. 4 illustrates a schematic diagram of an independent authentication scheme in the related art. The scheme can be applied to the communication system shown in FIG. 1 to FIG. 3. As shown in FIG. 4, when the host device needs to authenticate M chips, the host device sends authentication data to each chip respectively; after receiving the authentication data, each chip calculates the authentication data according to a preset algorithm to obtain an authentication result, and feeds back the authentication result to the host device; the host device determines whether each chip has passed the authentication based on the authentication result fed back by each chip. Exemplarily, the host device sends authentication data 1 to chip 1; after receiving authentication data 1, chip 1 calculates authentication data 1 according to a preset algorithm to obtain authentication result 1, and feeds back authentication result 1 to the host device; the host device determines whether chip 1 has passed the authentication based on the authentication result 1 fed back by chip 1. The host device sends authentication data 2 to chip 2; after receiving authentication data 2, chip 2 calculates authentication data 2 according to a preset algorithm to obtain authentication result 2, and feeds back authentication result 2 to the host device; the host device determines whether chip 2 has passed the authentication based on the authentication result 2 fed back by chip 2. In the same way, the authentication of all chips is completed, which will not be repeated here.

It should be noted that in FIG. 4, connection linkage between the host device and the chips represents the information interaction relationship between the host device and the chips, but not the connection relationship between the host device and the chips. The connection relationship between the host device and the chips can refer to the description of the embodiments shown in FIG. 1 to FIG. 3, and for the sake of simplicity, it will not be repeated here.

It should be noted that in the above independent authentication scheme, the host device needs to interact with each chip to complete the authentication of all chips, resulting in a high load on the host device. Furthermore, the host device needs to interact with each chip at least twice, that is, the host device needs to interact with the chips at least 2M times, which increases the load on the host device.

To solve the above problems, the embodiments of the present disclosure provide an authentication solution, and the authentication solution can reduce the load of the host device and save system performance overhead during the authentication of a plurality of chips.

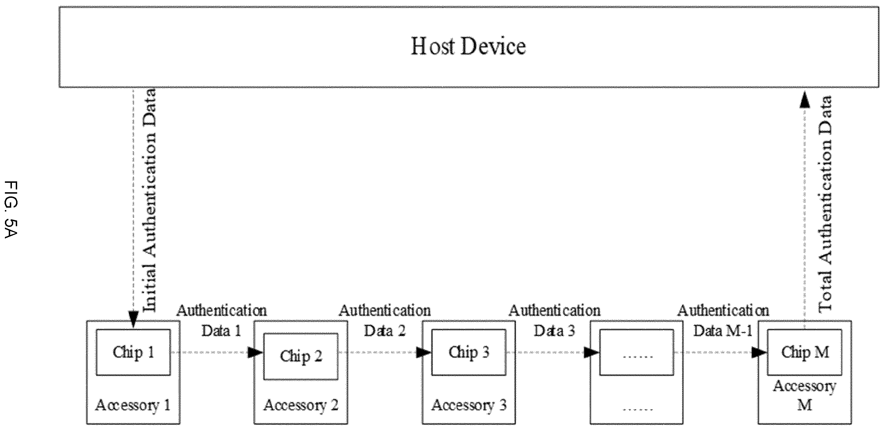

FIG. 5A illustrates a schematic diagram of an authentication scheme in accordance with an embodiment of the present disclosure. The scheme can be applied to the communication systems shown in FIG. 1 to FIG. 3. As shown in FIG. 5A, when the host device needs to authenticate M chips, the host device sends initial authentication data to chip 1. After chip 1 receives the initial authentication data, chip 1 performs an authentication processing on the initial authentication data to obtain authentication data 1, and sends authentication data 1 to chip 2; after chip 2 receives authentication data 1, chip 2 performs an authentication processing on authentication data 1 to obtain authentication data 2, and sends authentication data 2 to chip 3;...; after chip M receives authentication data M-1, chip M performs an authentication processing on authentication data M-1 to obtain total authentication data, and sends the total authentication data to the host device. It should be noted that if one or more chips in the M chips are abnormal, the total authentication data will not meet expectations. In other words, only when the M chips all complete the authentication processing normally according to the set rules, the obtained total authentication data will meet expectations. Therefore, the host device can determine whether there is a chip, among the M chips, that does not meet the expectations based on the total authentication data.

It should be noted that in the embodiments of the present disclosure, the authentication processing algorithms executed by different chips may be the same or different, which is not limited in the embodiments of the present disclosure. It should also be noted that an authentication processing algorithm may include only the algorithm itself, or may include the algorithm and the calculation factors involved in the calculation. If any one of the algorithms and the calculation factors involved in the calculation is different, it indicates that the corresponding authentication processing algorithms are different.

It should be noted that in the authentication scheme(s) in accordance with the embodiments of the present disclosure, the host device only interacts with the first chip (i.e., chip 1) and the last chip (chip M) to complete the authentication of all chips, which effectively reduces the load of the host device compared to the independent authentication scheme. Furthermore, the host device only transmits information once with the first chip (e.g., chip 1) and the last chip (e.g., chip M), respectively, which reduces the number of information interactions between the host device and the chips, further reducing the load of the host device, and saving the system performance overhead.

Furthermore, by comparing FIG. 1 to FIG. 3 with FIG. 5A, it can be seen that in the illustrated embodiment in FIG. 5A, the order in which the M chips execute the authentication processing is the same as the order in which the M chips are mounted on the communication bus, which is chip 1→chip 2→chip 3→...→chip M. However, the embodiments of the present disclosure do not limit the relationship between "the order in which the chips execute the authentication process" and "the order in which the chips are mounted on the communication bus", and those skilled in the art can adjust the order in which the chips execute the authentication processing according to actual needs. The order in which the chips execute the authentication processing can also be referred to as "authentication data processing order".

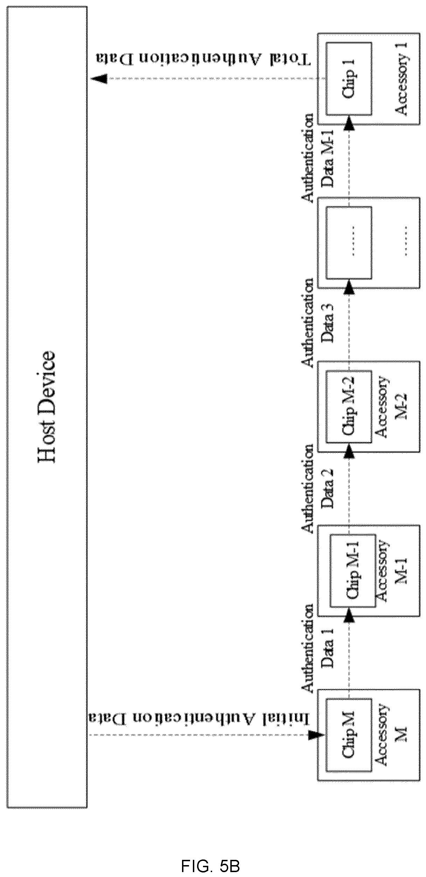

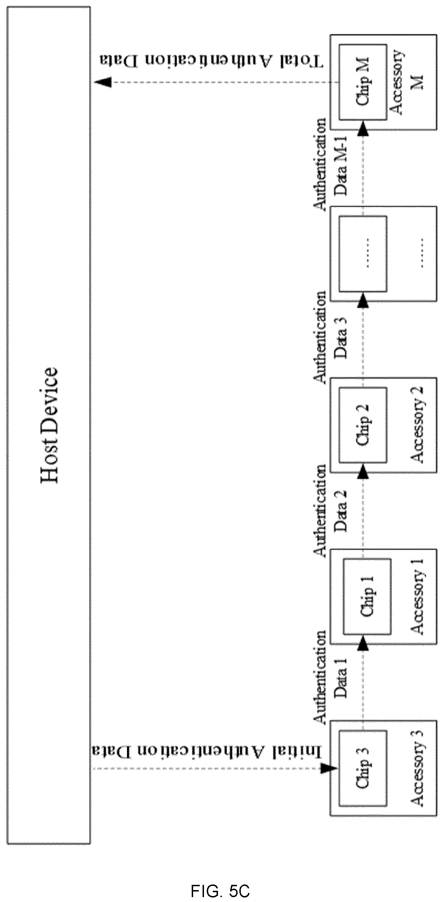

Exemplarily, in the embodiments shown in FIG. 5B, the order in which the M chips perform the authentication processing is: chip M→chip M-1→chip M-2→...→chip 1, which is different from the order in which the chips are mounted on the communication bus in FIG. 1 to FIG. 3. In the embodiments shown in FIG. 5C, the order in which the M chips perform the authentication processing is: chip 3→chip 1→chip 2→...→chip M, which is different from the order in which the chips are mounted on the communication bus in FIG. 1 to FIG. 3.

It should be noted that in FIG. 5A to FIG. 5C, the linkage between the host device and the chips represents the information interaction relationship between the host device and the chips, not the connection relationship between the host device and the chips. The linkage between the chips represents the information interaction relationship between the chips, but not the connection relationship between the chips. The connection relationship between the host device and the chips and the connection relationship between the chips can refer to the description of the embodiments shown in FIG. 1 to FIG. 3, and for the sake of brevity, these details will not be repeated here.

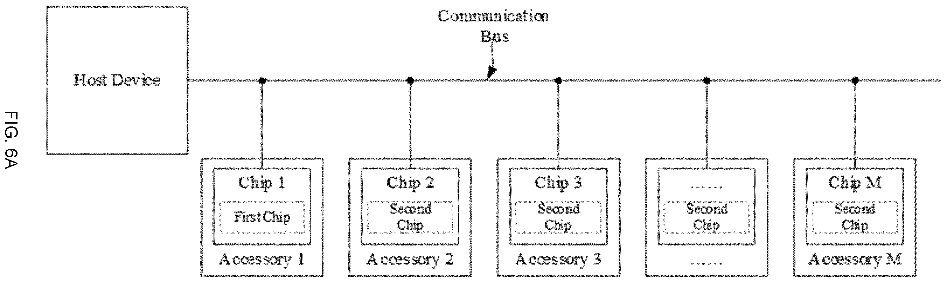

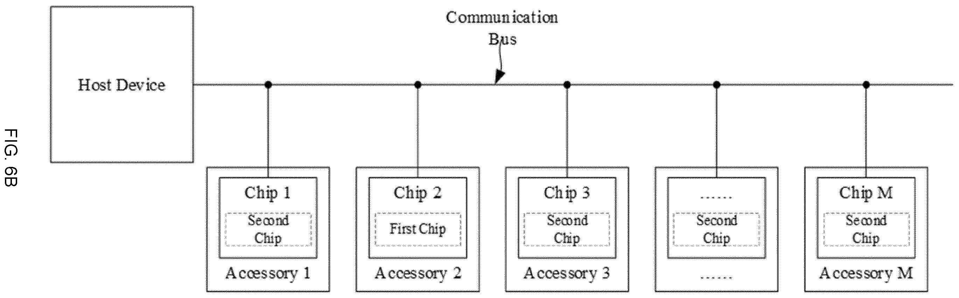

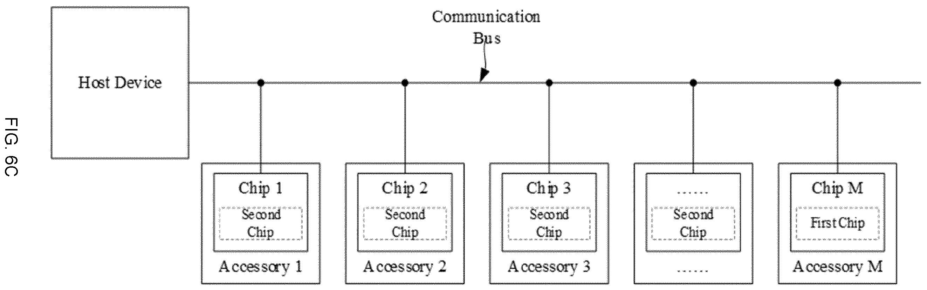

For ease of understanding, the technical solutions in accordance with the embodiments of the present disclosure are described in detail from a host device aspect and a chip aspect respectively. Here, for ease of description, any chip in the communication system is regarded as a "first chip", and the technical solution of the chip aspect is described from the perspective of the first chip. In order to distinguish from other chips in the communication system, other chips in the communication bus are referred to as "second chips". Exemplarily, if chip 1 in FIG. 1 is regarded as the first chip, the remaining chips (i.e., chip 2-chip M) are all second chips, as shown in FIG. 6A; or, if chip 2 in FIG. 1 is regarded as the first chip, the remaining chips (i.e., chip 1, chip 3-chip M) are all second chips, as shown in FIG. 6B; or, if chip M in FIG. 1 is regarded as the first chip, the remaining chips (i.e., chip 1-chip M-1) are all second chips, as shown in FIG. 6C.

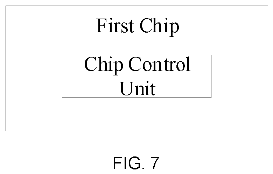

FIG. 7 illustrates a block diagram of the structure of a first chip in accordance with an embodiment of the present disclosure. The first chip is configured to communicate with the host device and N second chips through the communication bus, where N≥1. As shown in FIG. 7, the first chip includes a chip control unit, which is configured to obtain the first authentication data on the communication bus; obtain the second authentication data based on the first authentication data, where the second authentication data is used to determine the total authentication data, and the total authentication data is used to determine whether there is a chip, among the first chip and the N second chips, that does not meet the expectations.

It should be noted that when the first chip is at different positions (e.g., first, not first, not last, or last) in the authentication data processing order, the first chip performs different actions during the authentication process.

For ease of the understanding, the execution actions of the first chip when it is at different positions in the authentication data processing order are described hereinafter in combination with different application scenarios.

Firstly, the first chip is the first one in the authentication data processing order.

In the embodiments of the present disclosure, when the first chip is the first one in the authentication data processing order, the first authentication data obtained by the first chip on the communication bus is the initial authentication data sent by the host device, and then the first authentication processing is performed based on the initial authentication data sent by the host device to obtain second authentication data.

For example, in the application scenario shown in FIG. 6A, chip 1 is the first chip, and chips 2 to M are all second chips. If the "order in which chips execute the authentication processing" and the "order in which chips are mounted on the communication bus" are the same, the order in which chips execute the authentication processing is shown in FIG. 5A, that is, chip 1 is the first chip in the authentication data processing order.

As shown in FIG. 5A and FIG. 6A, it can be seen that after chip 1 (i.e., the first chip) obtains the initial authentication data (i.e., first authentication data) sent by the host device on the communication bus, chip 1 performs a first authentication processing based on the initial authentication data (i.e., the first authentication data) to obtain authentication data 1 (i.e., the second authentication data).

In the embodiments of the present disclosure, when the first chip is not the last chip, the first chip is also configured to output second authentication data so that at least one second chip among the N second chips performs a second authentication processing to obtain total authentication data.

It should be noted that the first chip is also not the last chip. Therefore, in the application scenario shown in FIG. 6A, after obtaining the authentication data 1 (i.e., the second authentication data), chip 1 (i.e., the first chip) outputs the authentication data 1 (i.e., the second authentication data) to the adjacent chip 2 (i.e., a second chip), so that chip 2-chip M performs a second authentication processing based on the second authentication data to obtain the total authentication data. Although the authentication processing performed by the first chip is called the first authentication processing, and the authentication performed by the chip 2-chip M on the data is collectively referred to as the second authentication processing. The authentication processing algorithms specifically executed by different chips in the chips 1-M can be the same or different.

Secondly, the first chip is an intermediate chip in the authentication data processing order.

In the embodiments of the present disclosure, when the first chip is not the first one, the first authentication data obtained by the first chip on the communication bus is the first authentication data output by a second chip, and then the first authentication processing is performed based on the first authentication data output by the second chip, to obtain the second authentication data.

For example, in the application scenario shown in FIG. 6B, chip 2 is the first chip, and chip 1 and chip 3-chip M are all second chips. If the "order in which the chips execute the authentication processing" and the "order in which the chips are mounted on the communication bus" are the same, the order in which the chips execute the authentication processing is shown in FIG. 5A, that is, the first chip is an intermediate chip in the authentication data processing order.

It should be noted that an intermediate chip is not the first chip. As shown in FIG. 5A and FIG. 6B, it can be seen that after chip 2 (i.e., the first chip) obtains authentication data 1 (first authentication data) output by chip 1 (i.e., a second chip) on the communication bus, it performs the first authentication processing based on authentication data 1 (i.e., the first authentication data) to obtain authentication data 2 (i.e., the second authentication data).

It should be noted that an intermediate chip is also not the last chip. Therefore, in the application scenario shown in FIG. 6B, after obtaining the authentication data 2 (i.e., the second authentication data), chip 2 (i.e., the first chip) outputs the authentication data 2 (i.e., the second authentication data) to the adjacent chip 3 (i.e., a second chip), so that the chip 3-chip M performs a second authentication processing based on the second authentication data to obtain the total authentication data.

Thirdly, the first chip is the last one in the authentication data processing order.

In the embodiments of the present disclosure, when the first chip is the last one, the second authentication data obtained by the first chip based on the first authentication data is the total authentication data. After obtaining the total authentication data, the first chip outputs the total authentication data to the host device.

For example, in the application scenario shown in FIG. 6C, chip M is the first chip, and chips 1 to M-1 are all second chips. If the "order in which chips execute the authentication processing" and the "order in which chips are mounted on the communication bus" are the same, the order in which chips execute the authentication processing is as shown in FIG. 5A, that is, the first chip is the last one in the authentication data processing order.

It should be noted that the last one is also not the first one in the authentication data processing order. Therefore, as shown in FIG. 5A and FIG. 6C, it can be seen that after chip M (i.e., the first chip) obtains the authentication data M-1 (i.e., the first authentication data) output by chip M-1 (i.e., a second chip) on the communication bus, it performs the first authentication processing based on the authentication data M-1 (i.e., the first authentication data) to obtain the second authentication data.

Additionally, for the last chip M, the second authentication data obtained is the total authentication data. Therefore, after obtaining the second authentication data, chip M (i.e., the first chip) determines that the second authentication data is the total authentication data, and then outputs the total authentication data to the host device.

It should also be noted that the first authentication processing corresponding to different chips can be the same or different, which is not limited in the present disclosure, and those skilled in the art can specifically configure it according to actual needs. Here, performing the first authentication processing on the authentication data specifically is performing calculation on the authentication data according to an authentication processing algorithm.

Furthermore, in the embodiments of the present disclosure, the second authentication data obtained by the first chip may be a calculation result directly calculated and generated by the first chip according to a first preset algorithm based on the obtained first authentication data. That is, the authentication processing is performed based on the first authentication data to obtain the second authentication data. The second authentication data may also be the first authentication data directly obtained by the first chip, that is, the first authentication data is directly determined as the second authentication data. Here, the first authentication data is used as a generation factor of the calculation result, and is used to calculate the calculation result. That is, the second authentication data may be a calculation result calculated based on the first authentication data, or may be the first authentication data, which is not limited in the embodiments of the present disclosure.

Specifically, in order to better understand the relationship between the first authentication data and the second authentication data, the authentication data processing order indicated in FIG. 5A (i.e., chip 1→chip 2→chip 3→...→chip M) and M=4 is used as an example for explanation.

For the first chip (i.e., chip 1) corresponding to the authentication data processing order, the second authentication data (i.e., authentication data 1) obtained by chip 1 can also be the initial authentication data directly provided by the host device, or can be a calculation result 1 obtained by chip 1 according to the first authentication processing 1 based on the initial authentication data.

For chip 2, the second authentication data (i.e., authentication data 2) obtained by chip 2 may include the initial authentication data provided by the host device, or the calculation result 1, or may be a calculation result 2 calculated according to a first authentication processing 2 based on the calculation result 1, or it may be a calculation result 2 calculated according to a first authentication processing 2' based on the initial authentication data, where the first authentication processing 2' is different from the first authentication processing 2.

For chip 3, the second authentication data (i.e., authentication data 3) obtained by chip 3 may include the initial authentication data provided by the host device, or the calculation result 1, or the calculation result 2, or may be a calculation result 3 calculated according to a first authentication processing 3 based on the calculation result 2, or a calculation result 3 calculated according to a first authentication processing 3' based on the calculation result 1, or a calculation result 3 calculated according to the first authentication processing 3" based on the initial authentication data, where the first authentication processing 3', the first authentication processing 3", and the first authentication processing 3 are different from each other.

For chip 4, the second authentication data obtained by chip 4 may include the initial authentication data provided by the host device, or the calculation result 1, or the calculation result 2, or the calculation result 3, and or may be a calculation result 4 calculated according to a first authentication processing 4 based on the calculation result 3, or a calculation result 4 calculated according to a first authentication processing 4' based on the calculation result 2, or a calculation result 4 calculated according to a first authentication processing 4" based on the calculation result 1, or a calculation result 4 calculated according to a first authentication processing 4'" based on the initial authentication data, that is, total authentication data. Here, the first authentication processing 4, the first authentication processing 4', the first authentication processing 4", and the first authentication processing 4'" are different from each other.

Although the above content only shows the process of calculating the total authentication data of 4 chips, those skilled in the art can also deduce the process of calculating the total authentication data when the number of chips connected to the host device exceeds 4 according to similar principles, which will not be repeated here.

In the embodiments of the present disclosure, after determining the second authentication data corresponding to themselves, the other chips, except the chip that directly calculates the total authentication data, output the second authentication data to other chips, so that the chip that directly calculates the total authentication data can obtain the calculation factor used to calculate the total authentication data and thus calculate the total authentication data. As can be seen from the above descriptions, the calculation factor of the total authentication data can be the above calculation result 1, calculation result 2, calculation result 3, etc.

Corresponding to the above embodiments, it can be seen that the total authentication data finally transmitted to the host device is calculated by multiple chips together. Therefore, when the total authentication data is transmitted to the host device, the host device can determine whether there is a chip not meeting the expectations based on the total authentication data.

Specifically, in the embodiments of the present disclosure, the initial authentication data provided by the host device can be a random number randomly generated by the host device, or can be fixed data provided by the host device. Those skilled in the art can set it according to actual needs, which is not limited in the present disclosure.

It should also be noted that a preset algorithm in the embodiments of the present disclosure may include only the algorithm itself, or may include the algorithm and other calculation factors involved in the calculation. The algorithm may be a technology well known to those skilled in the art, and the calculation factors may be values set by those skilled in the art according to actual needs, which is not limited in the present disclosure.

For the embodiments disclosed herein, the host device sends initial authentication data to a chip, specifically, the host device outputs the initial authentication data and communication identifier information of the chip, specified to receive the initial authentication data, to the communication bus in an associated manner, so that the chip corresponding to the communication identifier information obtains the initial authentication data through the communication bus. The communication identifier information is used to enable the chip to communicate with the host device. For example, the communication identifier information can be the communication address information corresponding to the chip.

For the embodiments disclosed herein, the second authentication data is transmitted between chips, specifically, one of the chips outputs the second authentication data and the communication identifier information of a chip specified to receive the second authentication data to the communication bus in an associated manner. Based on the communication identifier information, the chip corresponding to the communication identifier information obtains the second authentication data corresponding to the communication identifier information through the communication bus.

For the embodiments disclosed herein, for a chip providing the host device with the total authentication data, specifically, the chip outputs the total authentication data and the communication identifier information, for specifying the host device as a receiving device of the second authentication data, to the communication bus in an associated manner. The host device determines the corresponding authentication data as the total authentication data based on the communication identifier information, thereby obtaining the total authentication data provided by the chip. Illustratively, the communication identifier information corresponding to the host device can be the communication address information corresponding to the host device. Alternatively, the chip receives a total authentication data query instruction sent to the chip by the host device, and the chip outputs the authentication data to the communication bus based on the total authentication data query instruction, and the host device uses the authentication data output by the chip to the communication bus as the total authentication data.

In view of the foregoing descriptions, it can be seen that, to achieve the transmission of authentication data, one embodiment is to output the authentication data and the communication identifier information, for specifying a device for receiving the authentication data, to the communication bus in an associated manner, and the device corresponding to the communication identifier information, for specifying a device for receiving the authentication data, can obtain the authentication data based on the communication identifier information, thereby achieving the transmission of the authentication data.

Another embodiment is to send an authentication data query instruction containing the communication identifier information, for specifying a device for providing the authentication data, to the communication bus, and the device corresponding to the communication identifier information, for specifying the device for providing the authentication data, outputs the authentication data to the communication bus based on the authentication data query instruction, so that the device that sends the authentication data query instruction obtains the authentication data.

In the embodiments of the present disclosure, for the sake of ease of distinction, the authentication data directly transmitted to the host device is referred to as "total authentication data", and the authentication data not directly transmitted to the host device is referred to as "intermediate data". That is, the authentication data output to the communication bus in an associated manner with the communication identifier information of the host device is referred to as "total authentication data", or the authentication data output to the communication bus by a specified chip based on a total authentication data query instruction sent by the host device is referred to as total authentication data, and the authentication data output to the communication bus in a manner associated with the communication identifier information of a chip is referred to as "intermediate authentication data".

In some embodiments, a chip may send the second authentication data corresponding to the chip itself as the total authentication data to the host device.

Specifically, the chip can output its own corresponding second authentication data and the communication identifier information, for designating the host device as a device for receiving the second authentication data, to the communication bus in an associated manner, so that the host device uses the second authentication data as the total authentication data. Alternatively, the chip can output its own corresponding second authentication data to the communication bus based on the total authentication data query instruction sent by the host device containing the communication identifier information of the chip, so that the host device uses the second authentication data as the total authentication data.

In some embodiments, the chip outputs the second authentication data as intermediate authentication data to the communication bus, and the intermediate authentication data is used to participate in a subsequent authentication processing to generate total authentication data.

Specifically, the chip can output its own corresponding second authentication data as intermediate authentication data to the communication bus, that is, the chip outputs its own corresponding second authentication data and the communication identifier information for specifying a device to receive the second authentication data to the communication bus in an associated manner, so that another chip obtains the second authentication data through the communication bus. Since the communication identifier information for specifying a device to receive the second authentication data is different from the communication identifier information of the host device, the second authentication data is output to the communication bus as intermediate authentication data.

Furthermore, in the embodiments of the present disclosure, the authentication data and the communication identifier information for specifying a device to receive the authentication data are output to the communication bus in an associated manner. In some embodiments, the authentication data and the communication identifier information for specifying a device to receive the authentication data can be assembled into a data packet according to certain rules, and then the data packet is output to the communication bus according to the rules corresponding to the communication protocol between the host device and the chip. Preferably, the communication identifier information for specifying a device to receive the authentication data is used as the data header of the data packet. Apparently, in the embodiments of the present disclosure, other methods can also be used to output the two in an associated manner to the communication bus, as long as the device corresponding to the communication identifier information specified to receive the authentication data can obtain the corresponding authentication data on the communication bus based on the association relationship information between the two.

Furthermore, in the embodiments of the present disclosure, the authentication data processing order can be fixedly set. For example, a communication identifier sequence information representing the authentication data processing order is stored in each chip. Based on the communication identifier sequence information, each chip obtains the authentication data corresponding to the communication identifier sequence information corresponding to itself , thereby completing the acquisition of the first authentication data corresponding to each chip. Each chip obtains the second authentication data based on the obtained first authentication data, and outputs the second authentication data to the communication bus, therefore, the total authentication data can be obtained according to the corresponding authentication data processing order.

For example, as shown in FIG. 5A, assuming that the number of chips connected to the communication bus is 4, and the communication identifier sequence information corresponding to the 4 chips is 1, 2, 3, and 4, respectively (i.e., the authentication data processing order is chip 1→chip 2→chip 3→chip 4). Therefore, after the host device outputs the initial authentication data on the communication bus, a chip (i.e., chip 1) with the communication identifier sequence information of 1 obtains the initial authentication data through the communication bus based on the communication identifier sequence information corresponding to itself, and obtains authentication data 1 based on the initial authentication data, and outputs the authentication data 1 and the communication identifier information of the device (i.e., chip 2) specified to receive the authentication data 1 to the communication bus in an associated manner. Thereafter, the chip (i.e., chip 2) with the communication identifier sequence information of 2 obtains the authentication data 1 through the communication bus based on the communication identifier sequence information corresponding to itself, and obtains the authentication data 2 based on the authentication data 1, and outputs the authentication data 2 and the communication identifier information of the device (i.e., chip 3) specified to receive the authentication data 2 to the communication bus in an associated manner. Thereafter, the chip (i.e., chip 3) with the communication identifier sequence information of 3 obtains the authentication data 2 through the communication bus based on the communication identifier sequence information corresponding to itself, and obtains the authentication data 3 based on the authentication data 2, and outputs the authentication data 3 and the communication identifier information of the device (i.e., chip 4) specified to receive the authentication data 3 to the communication bus in an associated manner. Thereafter, the chip (i.e., chip 4) with the communication identifier sequence information of 4 obtains the authentication data 3 through the communication bus based on the communication identifier sequence information corresponding to itself, and obtains the authentication data 4 (i.e., the total authentication data) based on the authentication data 3.

Furthermore, in the embodiments of the present disclosure, the authentication data processing order can also be specified by the host device, and the host device and each chip respectively store the correspondence between the communication identifier sequence information used to represent the authentication data processing order and the communication identifier information preset for each chip. The host device outputs the initial authentication data and the communication identifier information for specifying a device for receiving the initial authentication data and the communication identifier sequence information, for specifying the authentication data processing order, to the communication bus in an associated manner. When a chip specified to receive the initial authentication data obtains the above information sent by the host device on the communication bus, the chip confirms that it is the receiving device of the initial authentication data according to the communication identifier information therein, and then obtains the second authentication data according to the initial authentication data (i.e., the first authentication data) associated with it. In addition, the chip determines a device that receives the second authentication data based on the communication identifier sequence information for specifying the authentication data processing order in the information sent by the host device, and outputs the second authentication data, the communication identifier sequence information for specifying the authentication data processing order, and the communication identifier information for specifying a device to receive the second authentication data to the communication bus in an associated manner, thereby enabling the next device corresponding to the authentication data processing order (such as the next chip) to complete the acquisition of its own corresponding first authentication data, which then obtains the second authentication data based on the obtained first authentication data, and outputs the second authentication data to the communication bus. Here, the communication identifier information of the chip specified to receive the second authentication data can specifically be the communication identifier information of a chip specified to receive the second authentication data output to the communication bus by a chip specified to receive the initial authentication data. This is determined based on the correspondence, between the communication identifier sequence information for specifying the authentication data processing order and the preset communication identifier information, stored in the chip specified to receive the initial authentication data. Other chips can also output their own corresponding second authentication data in a similar manner, thereby obtaining the total authentication data.

For example, as shown in FIG. 5A, assuming that the number of chips connected to the communication bus is 4, the 4 chips each respectively store the correspondence between the communication identifier sequence information for specifying the authentication data processing order and the preset communication identifier information, as exemplified in the following table.

| Communication identifier sequence information | Preset communication identifier information |
|---|---|
| 1 | 58 |
| 2 | 44 |
| 3 | 59 |
| 4 | 57 |

The host device outputs the initial authentication data, the communication identifier sequence information (e.g., 3, 1, 2, 4) for specifying the authentication data processing order, and the communication identifier information corresponding to the chip specified to receive the initial authentication data to the communication bus in an associated manner. The communication identifier information corresponding to the chip specified to receive the initial authentication data is 59.

The chip (i.e., chip 1) whose communication identifier information is 59 obtains the initial authentication data through the communication bus, and obtains the authentication data 1 based on the initial authentication data. In addition, chip 1 can also determine that the device for receiving the authentication data 1 is the chip 2 corresponding to the communication identifier sequence information of 1 according to the communication identifier sequence information, and determine the communication identifier information of 58 corresponding to chip 2 based on the corresponding relationship shown in Table 1. Thus, chip 1 outputs the authentication data 1, the communication identifier sequence information and the communication identifier information of 58 corresponding to chip 2 to the communication bus in an associated manner.

The chip (i.e., chip 2) whose communication identifier information is 58 obtains the authentication data 1 through the communication bus, and obtains authentication data 2 based on the authentication data 1. In addition, chip 2 can also determine that a device for receiving the authentication data 2 is chip 3 corresponding to communication identifier sequence information of 2 according to the communication identifier sequence information, and determine the communication identifier information of 44 corresponding to chip 3 based on the corresponding relationship shown in Table 1. As a result, chip 2 outputs the authentication data 2, the communication identifier sequence information (3, 1, 2, 4) and the communication identifier information of 44 corresponding to chip 3 to the communication bus in an associated manner.

The chip (i.e., chip 3) whose communication identifier information is 44 obtains the authentication data 2 through the communication bus, and obtains authentication data 3 based on the authentication data 2. In addition, chip 3 can also determine that the device for receiving authentication data 3 is chip 4 corresponding to the communication identifier sequence information of 4 based on the communication identifier sequence information, and determine the communication identifier information of 57 corresponding to chip 4 based on the corresponding relationship shown in Table 1. As a result, chip 3 outputs the authentication data 3, the communication identifier sequence information (3, 1, 2, 4) and the communication identifier information of 57 corresponding to chip 4 to the communication bus in an associated manner.

The chip with the communication identifier information of 57 (i.e., chip 4) obtains the above information output by chip 3 through the communication bus, and confirms that it is the last one in the authentication data processing order. The chip then obtains authentication data 4 based on the authentication data 3 and uses the authentication data 4 as the total authentication data.

When the number of chips connected to the host device exceeds 4, the total authentication data can be determined in a similar manner, which will not be repeated here.

In some embodiments, after the host device outputs the initial authentication data on the communication bus, the host device enters a waiting state. Once the authentication data output on the communication bus is correlated with the communication identifier information corresponding to the host device, the host device determines that the corresponding data is the total authentication data based on the communication identifier information of the host device, thereby enabling the host device to obtain the total authentication data.

Specifically, the host device obtains the authentication data and communication identifier information associated with the authentication data and used to specify the device for receiving the authentication data on the communication bus; and to determine whether the communication identifier information of the device is consistent with the communication identifier information of the host device; when the communication identifier information of the device is consistent with the communication identifier information of the host device, the authentication data is used as the total authentication data.

In some embodiments, after the host device outputs the initial authentication data on the communication bus, a timing unit is triggered to start timing (the starting point of the timing may be the endpoint when the host device completes the sending of the initial authentication data). When the timing value of the timing unit reaches a preset value, a total authentication data query instruction for querying the total authentication data is output to the communication bus, and the host device obtains the total authentication data based on the total authentication data query instruction. Specifically, the total authentication data query instruction includes specified communication identifier information, and the chip corresponding to the specified communication identifier information outputs the total authentication data on the communication bus based on the total authentication data query instruction. In this way, the host device is allowed to directly send the total authentication data query instruction to the specified chip, thereby causing the host device to obtain the total authentication data provided by the specified chip based on the total authentication data query instruction. Furthermore, before the timing value of the timing unit reaches the preset value, the host device enters a preset working mode, and the preset working mode is configured to instruct the host device to enter a state of not responding to any signal on the communication bus, thereby further reducing the communication load of the host device.

Furthermore, before a chip outputs data to the communication bus, the chip needs to switch the working mode, specifically, from the slave mode to the host device mode. Specifically, when the chip works in the slave mode, the chip cannot actively output data to the communication bus, and needs to provide data to the communication bus according to the instructions sent by the host device. When the chip works in the host device mode, the chip can actively output data to the communication bus, and does not need to passively output data to the communication bus according to the instructions of the host device.

Corresponding to the above embodiments, the host device can determine whether there is a chip not meeting the expectations, among the first chip and the N second chips, based on the total authentication data. If the host device determines that there is a chip, among the first chip and the N second chips, not meeting the expectations based on the total authentication data, the host device cannot determine which chips among the first chip and the N second chips do not meet expectations. In this scenario, in order to further determine which chips among the first chip and the N second chips do not meet expectations, the host device sends third authentication data corresponding to each chip to the first chip and each of the N second chips. Each chip performs a third authentication processing based on the third authentication data to obtain the fourth authentication data corresponding to each chip. Each chip sends the fourth authentication data to the host device. The host device determines the chips that do not meet expectations among the first chip and the N second chips based on the fourth authentication data sent by each chip.

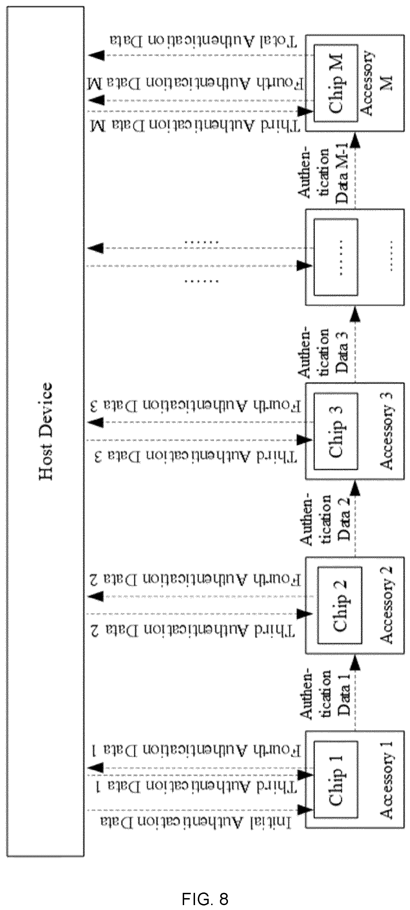

Exemplarily, in the application scenario shown in FIG. 8, the host device sends initial authentication data to chip 1, and chips 1-chip M perform an authentication processing on the initial authentication data in turn to obtain total authentication data, and send the total authentication data to the host device. After receiving the total authentication data, the host device determines that there is a chip not meeting the expectations among chips 1-chip M based on the total authentication data. In order to determine which chips do not meet expectations, the host device sends third authentication data 1 to chip 1; after receiving the third authentication data 1, chip 1 performs a third authentication processing based on the third authentication data 1, obtains the fourth authentication data 1, and feeds back the fourth authentication data 1 to the host device; the host device determines whether chip 1 meets expectations based on the fourth authentication data 1 fed back by chip 1. Specifically, if the fourth authentication data 1 meets expectations, it is determined that chip 1 meets expectations; if the fourth authentication data 1 does not meet expectations, it is determined that chip 1 does not meet expectations.

The host device sends the third authentication data 2 to the chip 2; after receiving the third authentication data 2, the chip 2 performs a third authentication processing based on the third authentication data 2, obtains the fourth authentication data 2, and feeds back the fourth authentication data 2 to the host device; the host device determines whether the chip 2 meets expectations based on the fourth authentication data 2 fed back by the chip 2. Specifically, if the fourth authentication data 2 meets expectations, it is determined that the chip 2 meets expectations; if the fourth authentication data 2 does not meet expectations, it is determined that the chip 2 does not meet expectations.

Similarly, the authentication of all chips is completed, and then it is determined which chips among chip 1 to chip M do not meet expectations, details of which will not be repeated here.

Specifically, in the embodiments of the present disclosure, the host device sends the third authentication data to each chip, and specifically the host device outputs the third authentication data and the communication identifier information of a chip specified to receive the third authentication data to the communication bus in an associated manner, thereby enabling the chip corresponding to the communication identifier information to obtain the third authentication data on the communication bus.

It should be noted that in the embodiments disclosed herein, the third authentication data sent by the host device and received by different chips may be the same or different, and the fourth authentication data sent by different chips to the host device may be the same or different, which is not limited in the embodiments of the present disclosure.

In order to further simplify the process of chip authentication by the host device, reduce the load of the host device, and reduce the complexity of program design, thereby effectively reducing the probability of failure during chip authentication by the host device, the embodiments of the present disclosure can also set a proxy chip among the multiple chips connected to the host device according to preset rules. The proxy chip outputs the total authentication data to the host device during the authentication process, so that the host device can determine whether there is a chip not meeting the expectations among the multiple chips connected to the host device.

In some embodiments, during the authentication process, the communications between the chips and the host device can be set to only allow the proxy chip to send data to the host, while other chips can still receive data sent by the host device. In some embodiments, it can also be set that only the proxy chip can communicate with the host device, that is, other chips cannot receive data sent by the host device or send data to the host device, or the communication data between other chips and the host device is regarded as invalid data. The authority scope of the proxy chip can be defined by those skilled in the art according to actual needs.

In some embodiments, the proxy chip directly obtains the initial authentication data output by the host device through the communication bus (that is, no other chip is required to transmit the initial authentication data), and calculates the total authentication data based on the initial authentication data, and transmits the total authentication data to the host device. Here, the calculation factors in the total authentication data calculated by the proxy chip include the data corresponding to each of the other chips (i.e., the non-proxy chips) connected to the communication bus. Here, the data corresponding to each of the other chips (i.e., the non-proxy chips) include the identifier information corresponding to the authentication processing algorithm and/or the authentication processing algorithm itself and/or the calculation factors used to generate the total authentication data. That is, the proxy chip performs the authentication processing on behalf of other chips, and the proxy chip performs the corresponding authentication processing based on the initial authentication data to calculate the total authentication data. In this way, the authentication processing of all to-be-authenticated chips can be completed by the proxy chip, thereby improving the processing efficiency and reducing the load of the host device.

The data corresponding to each of the other chips (i.e., the non-proxy chips) may be data provided to the proxy chip by each of the other chips (i.e., the non-proxy chips), or may be data corresponding to each of the non-proxy chips determined by the proxy chip according to preset rules.

Specifically, after the proxy chip obtains the initial authentication data from the host device, the proxy chip switches to the host device mode and communicates with each of the non-proxy chips to obtain the data provided by the corresponding chips for calculating the total authentication data. The proxy chip thus calculates the total authentication data based on the initial authentication data and the data provided by each of the non-proxy chips.

Furthermore, the data provided by the non-proxy chips to the proxy chip may also be data provided by the non-proxy chip to the proxy chip before the authentication process. The proxy chip will obtain the data provided by each of the non-proxy chips and store it in advance in the proxy chip. After the proxy chip obtains the initial authentication data from the host device, the proxy chip calculates the total authentication data based on the initial authentication data and the pre-stored data provided by each of the non-proxy chips.

In some embodiments, the proxy chip directly determines the data corresponding to each of the non-proxy chips according to preset rules. For example, the proxy chip determines the data corresponding to each of the non-proxy chips according to some rules based on its own pre-stored data. The proxy chip can also determine the data corresponding to each of the non-proxy chips according to preset rules based on the data previously provided by each of the non-proxy chips.

It should be noted that all chips connected to the communication bus participate in the calculation of the total authentication data. Therefore, if one or more chips among the multiple chips connected to the communication bus are abnormal, the total authentication data will not meet expectations. Therefore, it is also possible to determine whether there is a chip not meeting the expectations among the multiple chips connected to the communication bus based on the total authentication data provided by the proxy chip.

The specific authentication processing is described hereinafter.

In scenario 1, a proxy chip is a fixed one of the to-be-authenticated chips or a chip other than the to-be-authenticated chips.

Specifically, when the authentication data processing order is a fixed setting, the host device outputs the initial authentication data to the communication bus. The proxy chip obtains the initial authentication data from the communication bus, and performs the authentication processing on the initial authentication data according to the preset authentication processing rules, thereby obtaining the total authentication data. Here, the preset authentication processing rules include multiple authentication processing algorithms and the execution order of the multiple authentication processing algorithms. Specifically, the multiple authentication processing algorithms are the authentication processing algorithms corresponding to all the to-be-authenticated chips connected to the communication bus, and the execution order of the multiple authentication processing algorithms is the execution order , of the authentication processing algorithms corresponding to all the to-be-authenticated chips, determined according to the authentication data processing order.

For example, the host device and chips 1-4 are connected to the communication bus, and chips 1-4 are all chips that the host device needs to authenticate, that is, to-be-authenticated chips. Here, chip 1 is a proxy chip, which, in addition to processing its own authentication processing, also needs to proxy the authentication processing of chips 2-4. The preset authentication data processing order is chip 1→chip 2 →chip 3 →chip 4. Chips 1 to 4 correspond to authentication processing algorithms 1 to 4 respectively. In other words, according to the preset authentication data processing order, the initial authentication data output by the host device should first be processed according to authentication processing algorithm 1 to obtain authentication data 1, and authentication data 1 should be processed according to authentication processing algorithm 2 to obtain authentication data 2, and authentication data 2 should be processed according to authentication processing algorithm 3 to obtain authentication data 3, and authentication data 3 should finally be processed to obtain the total authentication data according to authentication processing algorithm 4. Accordingly, the proxy chip (i.e., chip 1) obtains the initial authentication data (i.e., the first authentication data) from the communication bus, executes, based on the initial authentication data, the authentication processing algorithms corresponding to all the to-be-authenticated chips according to the execution order corresponding to the preset authentication data processing order to obtain the second authentication data, and determines the second authentication data as the total authentication data.

When the authentication data processing order is specified by the host device, the host device and the proxy chip respectively store the correspondence between the communication identifier sequence information for specifying the authentication data processing order and the preset communication identifier information of the host device and each to-be-authenticated chip. At this moment, the host device outputs the initial authentication data and the communication identifier information for specifying the chip to receive the initial authentication data and the communication identifier sequence information, for specifying the authentication data processing order, to the communication bus in an associated manner.

The proxy chip obtains the above information sent by the host device from the communication bus, and determines the authentication processing rules according to the communication identifier sequence information for specifying the authentication data processing order and the correspondence between the communication identifier sequence information for specifying the authentication data processing order and the preset communication identifier information of the host device and each to-be-authenticated chip included in the above information. The authentication processing rules include multiple authentication processing algorithms and the execution order of the multiple authentication processing algorithms. Specifically, the multiple authentication processing algorithms are the authentication processing algorithms corresponding to all the to-be-authenticated chips connected to the communication bus, and the execution order of the multiple authentication processing algorithms is the execution order of the authentication processing algorithms corresponding to all the to-be-authenticated chips determined according to the authentication data processing order.

For example, the host device and chips 1-4 are connected to the communication bus, and chips 1-4 are all chips that the host device needs to authenticate, that is, to-be-authenticated chips. Here, chip 1 is the proxy chip, which, in addition to processing its own authentication processing, also needs to proxy the authentication processing of chips 2-4. The host device outputs association information on the communication bus, and the association information includes initial authentication data and communication identifier sequence information for specifying the authentication data processing order. Proxy chip 1 obtains the association information output by the host device from the communication bus, and determines the chip order for executing the authentication processing according to the communication identifier sequence information for specifying the authentication data processing order, and further determines the corresponding authentication processing algorithms and their execution order according to the determined the chip order for executing the authentication processing. Based on the initial authentication data (i.e., the first authentication data) obtained from the communication bus, the proxy chip (i.e., chip 1) executes the corresponding authentication processing algorithms in the determined chip order to obtain the second authentication data, and outputs the second authentication data to the communication bus, so that the host device determines that the second authentication data is the total authentication data.

In scenario 2, the proxy chip is one of the to-be-authenticated chips selected by the host device.

In this scenario, the host device further outputs the communication identifier information of the proxy chip and the initial authentication data in an associated manner to the communication bus, so that a to-be-authenticated chip connected to the communication bus can confirm whether it is a proxy chip. After determining that it is the proxy chip, the to-be-authenticated chip obtains the total authentication data according to the relevant descriptions in scenario 1.

In some embodiments, the manner in which the host device obtains the total authentication data can be that the proxy chip outputs the total authentication data and the communication identifier information designating the host device as the receiving device to receive the total authentication data to the communication bus in an associated manner, and the host device obtains the total authentication data from the communication bus based on the communication identifier information of the host device.

In some embodiments, the host device outputs a total authentication data query instruction containing the communication identifier information of the proxy chip to the communication bus, and the proxy chip feeds back the total authentication data to the host device based on the total authentication data query instruction. The specific details of the host device obtaining the total authentication data are similar to the above descriptions and will not be repeated here.

In some embodiments, other chips pass the initial authentication data obtained through communication with the host device to the proxy chip, and the proxy chip calculates total authentication data based on the initial authentication data, and outputs the total authentication data to the communication bus so that the host device obtains the total authentication data. Here, the calculation factors in the total authentication data calculated by the proxy chip include data respectively provided by other chips connected to the communication bus.

Specifically, when the host device outputs the initial authentication data on the communication bus, it designates one of the other chips as the device for receiving the initial authentication data, so that the other chip (i.e., not the proxy chip) obtain the initial authentication data and provide the initial authentication data to the proxy chip. The proxy chip then calculates the total authentication data based on the initial authentication data and the data provided by the other chips.

The way in which other chips obtain the initial authentication data from the host device, and the way in which the host device obtains the total authentication data, can be found in the above descriptions and will not be repeated here.

In some embodiments, the data obtained by the proxy chip for calculating the total authentication data may not be the initial authentication data, but may be calculation factors corresponding to the total authentication data provided by the other chips. For example, the calculation factors may be the calculation result 1, calculation result 2, calculation result 3, etc. calculated based on the initial authentication data. The proxy chip calculates the total authentication data after obtaining the calculation factors of the total authentication data. The specific way of calculation is not limited in the embodiments of the present disclosure.

In some embodiments, the total authentication data obtained by the proxy chip can also be calculated and obtained by another chip, but the total authentication data is ultimately fed back to the host device by the proxy chip. The calculation factors for the total authentication data calculated by the other chip include the authentication data provided by each chip, other than the other chip, among the multiple chips connected to the communication bus.

In some embodiments, the proxy chip is specified by the host device. In some embodiments, after the host device outputs the initial authentication data to the communication bus, the host device outputs a total authentication data query instruction containing the specified communication identifier to the communication bus to obtain the total authentication data, and the chip corresponding to the specified communication identifier contained in the total authentication data query instruction is the proxy chip specified by the host device. In some embodiments, the host device outputs the initial authentication data and the communication identifier sequence information, for specifying the authentication data processing order, to the communication bus in an associated manner, and sets the chip corresponding to the communication identifier sequence information for specifying the last authentication data processing in the communication identifier sequence information as the proxy chip.

In some embodiments, the proxy chip is determined by negotiation of the multiple chips that are connected to the host device. For example, a chip corresponding to a certain developer color feature is set as the proxy chip by default, or the proxy chip is determined according to the value of corresponding variable data in the multiple chips. For example, the variable data can be developer consumption information or the number of remaining printable pages, etc. The chip corresponding to the maximum or minimum value of the variable data corresponding to the multiple chips can be directly set as the proxy chip. The embodiments of the present disclosure do not limit the specific method of setting the proxy chip.

Furthermore, the embodiments of the present disclosure also provide an implementation method of dynamically adjusting the proxy chip, thereby optimizing the utilization of chip resources.

Specifically, when the host device outputs, on the communication bus, the communication identifier information corresponding to the chip that directly provides the total authentication data (i.e., the communication identifier information corresponding to the proxy chip), one of the non-proxy chips determines to communicate with the host device using the communication identifier information corresponding to the proxy chip, switches its own working mode to the host device mode, and outputs an instruction, containing the communication identifier information corresponding to the proxy chip, to the communication bus, so as to instruct the multiple chips connected to the host device other than itself to avoid using the communication identifier information corresponding to the proxy chip to communicate with the host device, thereby effectively avoiding the problem of communication conflicts. The proxy chip can be changed according to demand, thereby optimizing the utilization of chip resources.

In some embodiments, in order to realize the change of the proxy chip, after the host device outputs a total authentication data query instruction to the communication bus, a non-proxy chip determines that the specified communication identifier contained in the total authentication data query instruction is inconsistent with its own current communication identifier, and then determines to use the specified communication identifier to communicate with the host device in the future. In addition, a notification message used to instruct other chips except itself to avoid using this specified communication identifier information to communicate with the host device is also output to the communication bus, thereby effectively avoiding the problem of communication conflicts while optimizing the utilization of chip resources.

For example, there are four chips connected to the host device (i.e., chip 1, chip 2, chip 3, chip 4). Corresponding to the above embodiments, chip 1 is specified as the proxy chip, and the proxy chip corresponds to the communication identifier a. In order to realize the change of the proxy chip, one of the non-proxy chips other than chip 1 (e.g., chip 2) determines to use the communication identifier a to communicate with the host device, and then switches its own working mode to the host device mode. Chip 2 outputs communication information including the communication identifier a to the communication bus to instruct the other chips (i.e., chip 1, chip 3, chip 4) other than chip 2 among the four chips to avoid using the communication identifier a to communicate with the host device, thereby effectively avoiding the problem of communication conflict. The other chips (i.e., chip 1, chip 3, chip 4) can subsequently use other communication identifier information different from the communication identifier a to communicate with the host device.

Corresponding to the above embodiments, the host device can determine whether there is a chip, among the first chip and the N second chips, not meeting the expectations based on the total authentication data. If the host device determines that there is a chip, among the first chip and the N second chips, not meeting the expectations based on the total authentication data, the host device cannot determine which chips among the first chip and the N second chips do not meet expectations. In this scenario, in order to further determine which chips among the first chip and the N second chips do not meet expectations, the host device sends the third authentication data corresponding to each chip to the first chip and each of the N second chips. Each chip performs a third authentication processing based on the third authentication data to obtain the fourth authentication data corresponding to each chip. Each chip sends the fourth authentication data to the host device. The host device determines the chip that does not meet expectations among the first chip and the N second chips based on the fourth authentication data sent by each chip.

Specifically, when the proxy chip feeds back the total authentication data to the host device, when the host device confirms that there is a chip, among the multiple chips, not meeting the expectations based on the total authentication data, it can directly communicate one by one with all the chips connected to the host device, thereby confirming which specific chip does not meet expectations.

Exemplarily, in order to determine which chips do not meet expectations, the host device sends third authentication data 1 to chip 1. After receiving the third authentication data 1, chip 1 performs a third authentication processing based on the third authentication data 1, obtains fourth authentication data 1, and feeds back the fourth authentication data 1 to the host device. The host device determines whether chip 1 meets expectations based on the fourth authentication data 1 fed back by chip 1. Specifically, if the fourth authentication data 1 meets expectations, it is determined that chip 1 meets expectations. If the fourth authentication data 1 does not meet expectations, it is determined that chip 1 does not meet expectations.

The host device sends third authentication data 2 to the chip 2. After receiving the third authentication data 2, the chip 2 performs a third authentication processing based on the third authentication data 2, obtains fourth authentication data 2, and feeds back the fourth authentication data 2 to the host device. The host device determines whether the chip 2 meets expectations based on the fourth authentication data 2 fed back by the chip 2. Specifically, if the fourth authentication data 2 meets expectations, it is determined that the chip 2 meets expectations. If the fourth authentication data 2 does not meet expectations, it is determined that the chip 2 does not meet expectations.

Similarly, the authentication of all chips is completed, and then it can be determined which chips among chip 1 to chip M do not meet expectations, which will not be repeated here.

It should be noted that in the embodiments disclosed herein, the third authentication data sent by the host device received by different chips may be the same or different, and the fourth authentication data sent by different chips to the host device may be the same or different, which is not limited in the embodiments of the present disclosure.

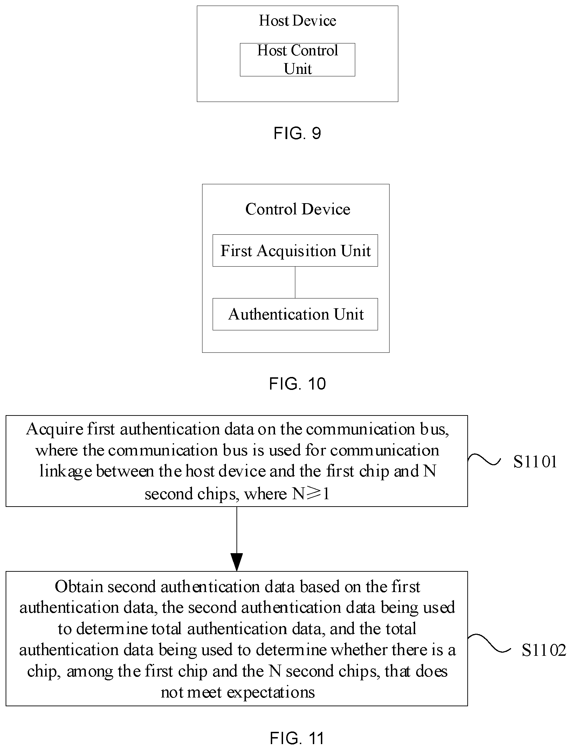

FIG. 9 illustrates a block diagram of a host device in accordance with an embodiment of the present disclosure. The host device is configured to communicate with the first chip and N second chips through the communication bus, where N ≥ 1. As shown in FIG. 9, the host device includes a host device control unit, and the host device control unit is configured to: output initial authentication data on the communication bus, the initial authentication data is used for authentication processing of the first chip and the N second chips; obtain total authentication data on the communication bus; and determine whether there is a chip, among the first chip and the N second chips, not meeting the expectations based on the total authentication data.

In some embodiments, the host device control unit is further configured to: when it is determined that there is a chip not meeting expectations among the at least two chips, send third authentication data corresponding to each chip to each of the at least two chips; obtain fourth authentication data output by each of the at least two chips, where the fourth authentication data corresponds to a result of performing a preset authentication processing on the third authentication data; and determine whether each of the at least two chips meets expectations based on the fourth authentication data output by each of the at least two chips.

In some embodiments, the host device control unit is specifically configured to: output the initial authentication data and the communication identifier sequence information for specifying the authentication data processing order and the communication identifier information for specifying a chip for receiving the initial authentication data to the communication bus in an associated manner; or, output the initial authentication data and the communication identifier information for specifying a chip for receiving the initial authentication data to the communication bus in an associated manner.

In some embodiments, the host device control unit is specifically configured to: after the initial authentication data is output on the communication bus, start a timing, and when the timing value reaches a preset value, output a total authentication data query instruction for querying the total authentication data on the communication bus; and obtain the total authentication data based on the total authentication data query instruction.

In some embodiments, the total authentication data query instruction includes specified communication identifier information, and the host device control unit is specifically configured to: based on the total authentication data query instruction, use the authentication data output by the chip corresponding to the specified communication identifier information on the communication bus as the total authentication data.

In some embodiments, the host device control unit is specifically configured to: acquire authentication data and communication identifier information associated with the authentication data and used to specify a device for receiving the authentication data on the communication bus; and determine whether the communication identifier information of the device is consistent with the communication identifier information of the host device; when the communication identifier information of the device is consistent with the communication identifier information of the host device, use the authentication data as the total authentication data.

In some embodiments, before the timing value reaches a preset value, the host device control unit is specifically configured to: control the host device to enter a preset working mode, where the preset working mode is used to instruct the host device to enter a state of not responding to any signal on the communication bus.

It should be noted that the specific contents involved in the embodiments disclosed herein can be found in the above descriptions, and for the sake of brevity, these details will not be repeated here.

Corresponding to the above embodiments, the embodiments of the present disclosure also provide a control device.

FIG. 10 illustrates a structural block diagram of a control device in accordance with an embodiment of the present disclosure. As shown in FIG. 10, the control device includes: a first acquisition unit, configured to acquire first authentication data on the communication bus, where the communication bus is used for communication linkage between the host device and at least two chips; and an authentication unit, configured to obtain second authentication data based on the first authentication data, where the second authentication data is used to determine total authentication data, and the total authentication data is used to determine whether there is a chip, of the at least two chips, that does not meet the expectations.

In some embodiments, the authentication unit is specifically configured to: perform an authentication processing based on the first authentication data to obtain the second authentication data, or directly determine the first authentication data as the second authentication data.

In some embodiments, the first acquisition unit is specifically configured to: obtain the first authentication data sent by the host device on the communication bus, or obtain the first authentication data sent by one of the at least two chips on the communication bus.

In some embodiments, the control device further includes a transmitting unit, and the transmitting unit is configured to: output the second authentication data as the total authentication data to the host device; or output the second authentication data to the communication bus as intermediate authentication data, and the intermediate authentication data is used to participate in a subsequent authentication processing to generate the total authentication data.

In some embodiments, the control device further includes a transmitting unit, where the first acquisition unit is configured to acquire third authentication data sent by the host device, where the third authentication data is directed to one of the at least two chips; the authentication unit is configured to perform a third authentication processing based on the third authentication data to obtain fourth authentication data; and the transmitting unit is configured to output the fourth authentication data to the communication bus, and the fourth authentication data is used to determine whether the chip pointed to by the third authentication data meets expectations.

In some embodiments, the control device further includes a transmitting unit, and the transmitting unit is configured to output the second authentication data and communication identifier information, for specifying a receiving device for receiving the second authentication data, to the communication bus in an associated manner.

In some embodiments, the control device further includes a determining unit, where the first acquisition unit is configured to acquire communication identifier sequence information, for specifying an authentication data processing order, on the communication bus; and the determining unit is configured to determine the communication identifier information for specifying a device for receiving the second authentication data based on the communication identifier sequence information.

In some embodiments, the transmitting unit is specifically configured to: output the second authentication data and the communication identifier information, for specifying the host device as a receiving device of the second authentication data, to the communication bus in an associated manner, so that the host device determines the second authentication data as the total authentication data; or based on a total authentication data query instruction output by the host device to the communication bus and its corresponding communication identifier, output the second authentication data to the communication bus, so that the host device determines the second authentication data as the total authentication data.

In some embodiments, the total authentication data query instruction includes a specified communication identifier, and the transmitting unit is specifically configured to determine, based on the specified communication identifier and the communication identifier corresponding to a chip itself, whether to output the second authentication data to the communication bus.

In some embodiments, when the transmitting unit is configured to output the second authentication data as intermediate authentication data to the communication bus, the transmitting unit is specifically configured to output the second authentication data and the communication identifier information, for specifying one of the at least two chips as the device for receiving the second authentication data, to the communication bus in an associated manner.

In some embodiments, the transmitting unit is specifically configured to: output the second authentication data to the communication bus when the specified communication identifier is consistent with the communication identifier corresponding to a chip itself.

In some embodiments, the control device further includes a determining unit, and the determining unit is configured to: determine to use specified communication identifier information to communicate with the host device when the specified communication identifier information is inconsistent with the communication identifier information corresponding to a chip itself; and the transmitting unit is specifically configured to output a notification message to the communication bus to instruct other chips among the at least two chips to avoid using the instruction communication identifier information to communicate with the host device.

In the embodiments of the present disclosure, the first acquisition unit, the authentication unit, the transmitting unit, and the determining unit can be implemented by software or by hardware.

Specifically, the first acquisition unit, the authentication unit, the transmitting unit, and the determining unit can be circuit units including devices such as field-programmable gate array (FPGA), microcontroller unit (MCU), digital signal processing (DSP), etc. The transmitting unit can also realize its function by building a specific waveform generator circuit, and the first acquisition unit and the determining unit can also realize corresponding functions by building a digital logic calculator. The disclosure does not further limit the specific implementation form of each unit.

In some embodiments, the first acquisition unit, the authentication unit, the transmitting unit, and the determining unit are all included in the first chip.

In some embodiments, the first acquisition unit, the authentication unit, the transmitting unit, and the determining unit are all included in the chip control unit of the first chip.

In some embodiments, at least one of the first acquisition unit, the authentication unit, the transmitting unit, and the determining unit is an external module connected to the chip control unit, while the other modules are disposed inside the chip control unit.

It should be noted that the specific contents involved in the embodiments disclosed herein can be found in the above descriptions, and for the sake of brevity, these details will not be repeated here.

Corresponding to the above embodiments, the embodiments of the present disclosure further provide an authentication method.

FIG. 11 illustrates a flow chart of a communication method in accordance with an embodiment of the present disclosure. The method can be applied to the control device or the first chip. As shown in FIG. 11, the method mainly includes the following steps.

Step S1101: acquiring first authentication data on the communication bus, where the communication bus is used for communication linkage between the host device and the first chip and N second chips, where N≥1.

Step S1102: obtaining second authentication data based on the first authentication data, the second authentication data being used to determine total authentication data, and the total authentication data being used to determine whether there is a chip, among the first chip and the N second chips, that does not meet expectations.

In some embodiments, obtaining the second authentication data based on the first authentication data includes: performing an authentication processing based on the first authentication data to obtain the second authentication data, or directly determining the first authentication data as the second authentication data.

In some embodiments, obtaining the first authentication data on the communication bus includes: obtaining the first authentication data sent by the host device on the communication bus, or obtaining the first authentication data sent by one of the at least two chips on the communication bus.

In some embodiments, the method further includes: sending the second authentication data as the total authentication data to the host device; or outputting the second authentication data as intermediate authentication data to the communication bus, and the intermediate authentication data is used to participate in a subsequent authentication processing to generate the total authentication data.

In some embodiments, the method further includes: acquiring third authentication data sent by the host device, where the third authentication data is directed to one of the at least two chips; and performing a third authentication processing based on the third authentication data to obtain fourth authentication data; and outputting the fourth authentication data to the communication bus, where the fourth authentication data is used to determine whether the chip pointed to by the third authentication data meets expectations.

In some embodiments, the method further includes: outputting the second authentication data to the communication bus, and at the same time outputting the communication identifier information, for specifying the device for receiving the second authentication data, to the communication bus.

In some embodiments, the method further includes: acquiring communication identifier sequence information for specifying an authentication data processing order on the communication bus; and based on the communication identifier sequence information, determining the communication identifier information for specifying the device for receiving the second authentication data.

In some embodiments, sending the second authentication data as the total authentication data to the host device specifically includes: outputting the second authentication data and the communication identifier information, for specifying the host device as the receiving device of the second authentication data, to the communication bus in an associated manner, so that the host device determines the second authentication data as the total authentication data; or based on a total authentication data query instruction output by the host device to the communication bus and the communication identifier information corresponding to a chip itself, outputting the second authentication data to the communication bus, so that the host device determines the second authentication data as the total authentication data.

In some embodiments, the total authentication data query instruction includes a specified communication identifier, and based on the total authentication data query instruction output by the host device to the communication bus and communication identifier information corresponding to a chip itself, outputting the second authentication data to the communication bus specifically includes: based on the specified communication identifier and the communication identifier information corresponding to a chip itself, determining to output the second authentication data to the communication bus.

In some embodiments, outputting the second authentication data as intermediate authentication data to the communication bus includes: outputting the second authentication data and communication identifier information, for specifying one of the at least two chips as the device for receiving the second authentication data, to the communication bus in an associated manner.

In some embodiments, determining to output the second authentication data to the communication bus based on the specified communication identifier information and the communication identifier information corresponding to a chip itself specifically includes: when the specified communication identifier information is consistent with the communication identifier information corresponding to a chip itself, outputting the second authentication data to the communication bus.

In some embodiments, the method are applied to one of the at least two chips, and when the specified communication identifier information is inconsistent with the communication identifier information corresponding to a chip itself, determine to use the specified communication identifier information to communicate with the host device, and a notification message is output to the communication us to instruct other chips among the at least two chips to avoid using the instruction communication identifier information to communicate with the host device.

It should be noted that the specific contents involved in the embodiments disclosed herein can be found in the above descriptions, and for the sake of brevity, these details will not be repeated here.

Corresponding to the above embodiment, the embodiments of the present disclosure also provide an authentication method.

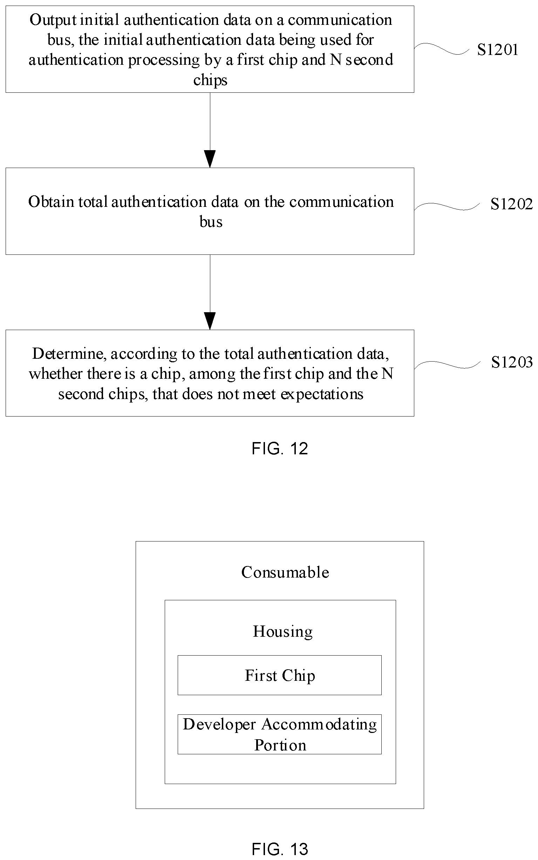

FIG. 12 illustrates a flow chart of another authentication method in accordance with an embodiment of the present disclosure. The method can be applied to the host device. As shown in FIG. 12, the method mainly includes the following steps.

Step S1201: Outputting initial authentication data on a communication bus, the initial authentication data being used for authentication processing by a first chip and N second chips.

Step S1202: Obtaining total authentication data on the communication bus.

Step S1203: Determining, according to the total authentication data, whether there is a chip, among the first chip and the N second chips, that does not meet expectations.

In some embodiments, the authentication method also includes: when it is determined that there is a chip that does not meet expectations among the first chip and the N second chips, sending third authentication data corresponding to each chip to the first chip and each of the N second chips, where the third authentication data corresponding to each chip is used for authentication processing of each chip to obtain fourth authentication data corresponding to each chip; obtaining fourth authentication data output by each of the first chip and the N second chips; and determining a chip, among the first chip and the N second chips, that does not meet expectations based on the fourth authentication data output by the first chip and the N second chips.

In some embodiments, the initial authentication data and the communication identifier sequence information for specifying the authentication data processing order and the communication identifier information for specifying a chip for receiving the initial authentication data are output to the communication bus in an associated manner, or the initial authentication data and the communication identifier information for specifying the chip for receiving the initial authentication data are output to the communication bus in an associated manner.

In some embodiments, after the initial authentication data is output on the communication bus, the method further includes: starting timing, and when the timing value reaches a preset value, outputting a total authentication data query instruction for querying the total authentication data on the communication bus; and obtaining the total authentication data based on the total authentication data query instruction.

In some embodiments, the total authentication data query instruction includes specified communication identifier information, and obtaining the total authentication data based on the total authentication data query instruction includes: based on the total authentication data query instruction, using the authentication data output by the chip, corresponding to the specified communication identifier information on the communication bus, as the total authentication data.

In some embodiments, obtaining total authentication data on the communication bus includes: acquiring authentication data and communication identifier information associated with the authentication data and used to specify a device for receiving the authentication data on the communication bus; determining whether the communication identifier information of the device is consistent with the communication identifier information of the host device; and when the communication identifier information of the device is consistent with the communication identifier information of the host device, using the authentication data as the total authentication data.

In some embodiments, the authentication method further includes: when it is determined that there is a chip, of the at least two chips, that does not meet the expectations, sending third authentication data corresponding to each chip to each chip of the at least two chips; acquiring fourth authentication data respectively output by each chip of the at least two chips, where the fourth authentication data corresponds to the result of performing the preset authentication processing on the third authentication data; and determining whether each of the at least two chips meets expectations based on the fourth authentication data output by each of the at least two chips.

In some embodiments, before the timing value of the timing unit reaches a preset value, the authentication method also includes: entering a preset working mode, where the preset working mode is used to instruct the host device to enter a state of not responding to any signal on the communication bus.

It should be noted that the specific contents involved in the embodiments disclosed herein can be found in the above descriptions, and for the sake of brevity, these details will not be repeated here.

Corresponding to the above embodiments, the embodiments of the present disclosure also provide consumables.

FIG. 13 illustrates a schematic structure diagram of a consumable in accordance with an embodiment of the present disclosure. As shown in FIG. 13, the consumable includes a housing; a developer accommodating portion located in the housing for accommodating the developer; and a first chip described in the above embodiments.

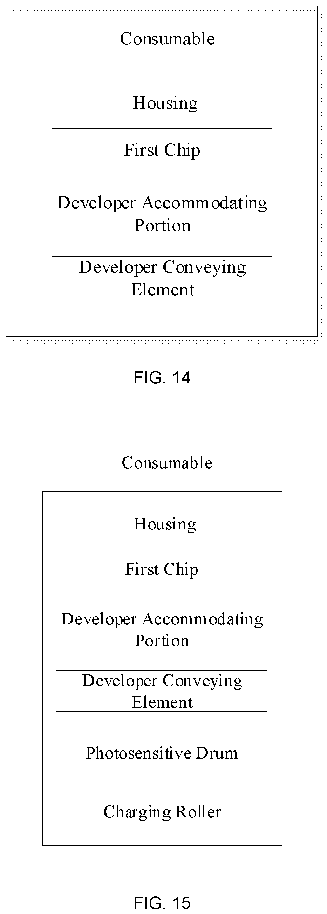

FIG. 14 illustrates a schematic structure diagram of another consumable in accordance with an embodiment of the present disclosure. As shown in FIG. 14, the consumable further includes a developer conveying element for conveying the developer based on the illustrated embodiment in FIG. 13.

FIG. 15 illustrates a schematic structure diagram of another consumable in accordance with an embodiment of the present disclosure. As shown in FIG. 15, the consumable further includes a photosensitive drum and a charging roller for charging the photosensitive drum based on the illustrated embodiment in FIG. 14.

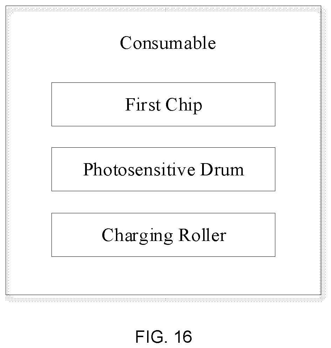

FIG. 16 illustrates a schematic structure diagram of another consumable in accordance with an embodiment of the present disclosure. As shown in FIG. 16, the consumable includes a photosensitive drum; a charging roller for charging the photosensitive drum; and a first chip described in the above embodiments.

It should be noted that the specific details of the first chip in the illustrated embodiments in FIG. 13 to FIG. 16 can be found in the descriptions of the above embodiments, and for the sake of brevity, the details will not be repeated here.

Corresponding to the above embodiments, the embodiments of the present disclosure further provide another consumable, which includes a housing; a developer accommodating portion located in the housing for accommodating the developer; and a control device described in the above embodiments.

In some embodiments, the consumable further includes a developer conveying element for conveying the developer.

In some embodiments, the consumable also includes a photosensitive drum; and a charging roller for charging the photosensitive drum.

Another consumable in accordance with the embodiments of the present disclosure includes a photosensitive drum, a charging roller for charging the photosensitive drum, and a control device described in the above embodiments.

Corresponding to the above embodiments, the embodiments of the present disclosure further provide another consumable, and the consumable includes a housing; a developer accommodating portion located in the housing for accommodating the developer; and a control device described in the above embodiments.

In some embodiments, the consumable further includes a developer conveying element for conveying the developer.

In some embodiments, the consumable also include a photosensitive drum; and a charging roller for charging the photosensitive drum.

Corresponding to the above embodiments, the embodiments of the present disclosure further provide another consumable, and the consumable includes a photosensitive drum; a charging roller for charging the photosensitive drum; and a control device described in the above embodiments.

Corresponding to the above embodiments, the embodiments of the present disclosure also provide a communication system, and the communication system includes the aforementioned first chip and N second chips; the aforementioned host device; where the host device is communicatively connected with the first chip and the N second chips through the communication bus, N≥1.

It should be noted that the specific contents involved in the embodiments disclosed herein can be found in the above descriptions, and for the sake of brevity, the details will not be repeated here.

Corresponding to the above embodiments, the embodiments of the present disclosure further provide a computer-readable storage medium, and the computer-readable storage medium may store a program. When the program is running, a device where the computer-readable storage medium is located may be controlled to execute some or all of the steps in the above method embodiment. In some embodiments, the computer-readable storage medium may be a magnetic disk, an optical disk, a read-only memory (ROM) or a random-access memory (RAM).

Corresponding to the above embodiments, the embodiments of the present disclosure further provide a computer program product, and the computer product includes executable instructions. When the executable instructions are executed on a computer, the computer executes some or all of the steps in the above method embodiments.

In the embodiments of the present disclosure, "at least one" refers to one or more, and "more" refers to two or more. "And/or" describes the association relationship of associated objects, indicating that three relationships may exist. For example, A and/or B may indicate that A exists alone, A and B exist at the same time, or B exists alone. A and B may be singular or plural. The character "/" generally indicates that the associated objects before and after are in an "or" relationship. "At least one of the following" and similar expressions refer to any combination of these items, including any combination of single or plural items. For example, at least one of a, b and c may represent: a, b, c, ab, ac, bc, or abc, where a, b, c may be single or multiple.

Those skilled in the art will appreciate that the various units and algorithm steps described in the embodiments disclosed here can be implemented in a combination of electronic hardware, computer software, and electronic hardware. Whether these functions are performed in hardware or software depends on the specific disclosure and design constraints of the technical solution. Professional and technical personnel can use different methods to implement the described functions for each specific disclosure, but such implementation should not be considered to be beyond the scope of this disclosure.

Those skilled in the art can clearly understand that, for the convenience and brevity of description, the specific working processes of the systems, devices and units described above can refer to the corresponding processes in the method embodiments and will not be repeated here.

In some embodiments in accordance with the present disclosure, if any function is implemented in the form of a software functional unit and sold or used as an independent product, it can be stored in a computer-readable storage medium. Based on this understanding, the technical solution of the present disclosure is essentially or the part that contributes to the prior art or the part of the technical solution can be embodied in the form of a software product, and the computer software product is stored in a storage medium, including a number of instructions to enable a computer device (which can be a personal computer, a server, or a network device, etc.) to perform all or part of the steps of the methods described in each embodiment of the present disclosure. The storage medium includes: U disk, mobile hard disk, ROM, RAM, magnetic disk or optical disk and other media that can store program codes.

The foregoing description is only some embodiments of the present disclosure. Any person skilled in the art can easily think of changes or substitutions within the technical scope disclosed in the present disclosure, which should be included in the protection scope of the present disclosure. The protection scope of the present disclosure should be based on the protection scope of the claims.

## Claims

1. An authentication method, comprising:
obtaining first authentication data on a communication bus, wherein the communication bus is configured for communication linkage between a host device and at least two chips; and
obtaining second authentication data based on the first authentication data, wherein the second authentication data is used to determine total authentication data, and the total authentication data is used to determine whether there is a chip, of the at least two chips, that does not meet expectations.

2. The authentication method according to claim 1, wherein obtaining the second authentication data based on the first authentication data comprises:
performing an authentication processing based on the first authentication data to obtain the second authentication data, or directly determining the first authentication data as the second authentication data.

3. The authentication method according to claim 1, wherein obtaining the first authentication data on the communication bus comprises:
obtaining the first authentication data sent by the host device on the communication bus; or
obtaining the first authentication data sent by one of the at least two chips on the communication bus.

4. The authentication method according to any one of claims 1 to 3, further comprising:
outputting the second authentication data as the total authentication data to the host device; or
outputting the second authentication data to the communication bus as intermediate authentication data, wherein the intermediate authentication data is used to participate in a subsequent authentication processing to generate the total authentication data.

5. The authentication method according to claim 1, further comprising:
obtaining third authentication data sent by the host device, wherein the third authentication data is directed to one of the at least two chips;
performing a third authentication processing based on the third authentication data to obtain fourth authentication data; and
outputting the fourth authentication data to the communication bus, wherein the fourth authentication data is used to determine whether the chip directed to by the third authentication data meets expectations.

6. The authentication method according to claim 1, further comprising:
acquiring communication identifier sequence information, for specifying an authentication data processing order, on the communication bus;
determining the communication identifier information, for specifying a device for receiving the second authentication data, based on the communication identifier sequence information; and
outputting the second authentication data and communication identifier information, for specifying a device for receiving the second authentication data, to the communication bus in an associated manner.

7. The authentication method according to claim 4, wherein outputting the second authentication data as the total authentication data to the host device further comprises:
outputting the second authentication data and communication identifier information, for specifying the host device as a receiving device of the second authentication data, to the communication bus in an associated manner, so that the host device determines the second authentication data as the total authentication data; or
based on a total authentication data query instruction sent by the host device to the communication bus and communication identifier information corresponding to a chip itself, outputting the second authentication data to the communication bus, so that the host device determines the second authentication data as the total authentication data.

8. The authentication method according to claim 7, wherein the total authentication data query instruction includes specified communication identifier information, and outputting the second authentication data to the communication bus based on the total authentication data query instruction sent by the host device to the communication bus and the communication identifier information corresponding to a chip itself further comprises:
determining to output the second authentication data to the communication bus based on the specified communication identifier information and the communication identifier information corresponding to a chip itself.

9. The authentication method according to claim 4, wherein outputting the second authentication data as intermediate authentication data to the communication bus comprises:
outputting the second authentication data and communication identifier information, for specifying one of the at least two chips as a device for receiving the second authentication data, to the communication bus in an associated manner.

10. The authentication method according to claim 8, wherein determining to output the second authentication data to the communication bus based on the specified communication identifier information and the communication identifier information corresponding to a chip itself further comprises:
when the specified communication identifier information is consistent with the communication identifier information corresponding to a chip itself, outputting the second authentication data to the communication bus.

11. The authentication method according to claim 10, wherein the method is applied to the one of the at least two chips; and
when the specified communication identifier information is inconsistent with the communication identifier information corresponding to the one of the at least two chips itself, determining to use the specified communication identifier information to communicate with the host device, and outputting a notification message to the communication bus to instruct other chips among the at least two chips to avoid using the specified communication identifier information to communicate with the host device.

12. A control device, comprising:
a first acquisition unit, configured to acquire first authentication data on a communication bus, wherein the communication bus is configured for communication linkage between a host device and at least two chips; and
an authentication unit, configured to obtain second authentication data based on the first authentication data, wherein the second authentication data is used to determine total authentication data, and the total authentication data is used to determine whether there is a chip, of the at least two chips, that does not meet expectations.

13. The control device according to claim 12, wherein the authentication unit is further configured to:
perform an authentication processing based on the first authentication data to obtain the second authentication data; or directly determine the first authentication data as the second authentication data.

14. The control device according to claim 12, wherein the first acquisition unit is further configured to:
obtain the first authentication data output by the host device on the communication bus; or obtain the first authentication data output by one of the at least two chips on the communication bus.

15. The control device according to any one of claims 12 to 14, further comprising a transmitting unit, wherein the transmitting unit is configured to:
send the second authentication data as the total authentication data to the host device; or
output the second authentication data as intermediate authentication data to the communication bus, wherein the intermediate authentication data is used to participate in a subsequent authentication processing to generate the total authentication data.

16. The control device according to claim 12, further comprising a transmitting unit, wherein:
the first acquisition unit is configured to acquire third authentication data sent by the host device, wherein the third authentication data is directed to one of the at least two chips;
the authentication unit is configured to perform a third authentication processing based on the third authentication data to obtain fourth authentication data; and
the transmitting unit is configured to output the fourth authentication data to the communication bus, wherein the fourth authentication data is used to determine whether the chip pointed to by the third authentication data meets expectations.

17. The control device according to claim 12, further comprising a determining unit and a transmitting unit, wherein:
the first acquisition unit is configured to acquire communication identifier sequence information, for specifying an authentication data processing order, on the communication bus;
the determining unit is configured to determine the communication identifier information, for specifying a device for receiving the second authentication data, based on the communication identifier sequence information; and
the transmitting unit is configured to output the second authentication data and communication identifier information, for specifying a device for receiving the second authentication data, to the communication bus in an associated manner.

18. The control device according to claim 15, wherein the transmitting unit is further configured to:
output the second authentication data and communication identifier information, for specifying the host device as a device for receiving the second authentication data, to the communication bus in an associated manner, so that the host device determines the second authentication data as the total authentication data; or
based on a total authentication data query instruction output by the host device to the communication bus and corresponding communication identifier corresponding to a chip itself, output the second authentication data to the communication bus, so that the host device determines the second authentication data as the total authentication data.

19. The control device according to claim 18, wherein the total authentication data query instruction includes specified communication identifier information; and
the transmitting unit is further configured to determine to output the second authentication data to the communication bus based on the specified communication identifier information and the communication identifier information corresponding to a chip itself.

20. The control device according to claim 15, wherein, to output the second authentication data as intermediate authentication data to the communication bus, the transmitting unit is further configured to:
output the second authentication data and the communication identifier information, for specifying one of the at least two chips as a device for receiving the second authentication data, to the communication bus in an associated manner.

21. The control device according to claim 19, wherein the transmitting unit is further configured to:
when the specified communication identifier information is consistent with the communication identifier information corresponding to a chip itself, output the second authentication data to the communication bus.

22. The control device according to claim 21, wherein the control device further comprising:
a determining unit, configured to determine to use the specified communication identifier information to communicate with the host device when the specified communication identifier information is inconsistent with the communication identifier information corresponding to a chip itself; and
the transmitting unit is further configured to output a notification message to the communication bus to instruct other chips of the at least two chips to avoid using the specified communication identifier information to communicate with the host device.

23. A consumable, comprising:
a housing;
a developer accommodating portion, located in the housing, for accommodating the developer; and
the control device according to any one of claims 12-22.

24. The consumable according to claim 22, further comprising: a developer conveying element for conveying the developer;and/or
a photosensitive drum; and a charging roller for charging the photosensitive drum.

25. A consumable, comprising:
a photosensitive drum;
a charging roller, configured for charging the photosensitive drum; and
the control device according to any one of claims 12-22.
